# EUROPEAN PATENT APPLICATION

(11) **EP 4 472 041 A1**
(43) Date of publication of application: **04.12.2024**
(21) Application number: 22924061.9
(22) Date of filing: 18.11.2022
(51) Int. Cl.: H02K 15/04, H02K 15/085

(54) **ARMATURE MANUFACTURING METHOD**

(30) Priority: 25.01.2022 JP 2022009724
(71) Applicant: NHK Spring Co., Ltd., Kanagawa 236-0004 (JP)
(72) Inventor: KOBAYASHI, Dai, Yokohama-shi, Kanagawa 236-0004 (JP); HIROTA, Yuji, Yokohama-shi, Kanagawa 236-0004 (JP)
(74) Representative: DREISS Patentanwälte PartG mbB
(86) International application number: PCT/JP2022/042932
(87) International publication number: WO 2023/145209

(57) **Abstract**

The present disclosure prevents the isolating coating of the terminal of a segment coil leg portion from being damaged when an inter-layer gap is enlarged. With this manufacturing method, a stator provided with a plurality of segment coils (40), both leg portions (42A, 42B) of which are inserted into each slot of a stator core and which are overlapped in the radial direction of the stator core into a plurality of layers (46A, 46B, 46C) and aligned in an annular shape, is manufactured. In this manufacturing method, a tool (74) having teeth (76A, 76B, 76C) is moved by a robot manipulator and thereby the teeth (76A, 76B, 76C) are inserted between the terminals of the leg portions (42) of the respective layers (46A, 46B, 46C). When inserted, the tool (74) is tilted in the insertion direction of the teeth (76A, 76B, 76C) and around the axis orthogonal to the radial direction and thereby the ends of the teeth (76A, 76B, 76C) are made non-contact with the insulating coatings of the terminals of the leg portions (42).

## Description

### Technical Field

The present disclosure relates to a method of manufacturing an armature.

### Background Art

International Patent Publication No. 2019/093515 discloses a method of processing segment coils that carries out twisting processing on the final ends of the leg portions of segment coils that project-out from an end surface of a core of an armature of a rotating electric machine. The final ends of the plural segment coil leg portions that have been subjected to the twisting processing are electrically joined together by welding or the like. In this processing method, the plural segment coils are superposed in plural layers in the radial direction of the core and are arrayed in annular forms. Then, twisting processing is carried out on the final ends of the segment coil leg portions that project-out from an end surface of the core. A disentangling process (a process for widening the intervals between the layers) is carried out before the twisting processing. In this disentangling process, a disentangling member having an interlayer interval widening member is moved in the radial direction and the axial direction of the core, and the final ends of the segment coil leg portions of the respective layers are separated, and the intervals between the final ends of the segment coil leg portions of the respective layers are thereby widened. Due thereto, the complexity and bother of aligning the final ends of the segment coil leg portions with respect to a twisting tool are reduced, and an improvement in the work efficiency in the twisting step is devised.

### SUMMARY OF INVENTION

### Technical Problem

In the above-described prior art, at the time when the disentangling member is moved in the radial direction and the axial direction of the core, the disentangling member slidingly contacts the final ends of the segment coil leg portions, and there is the possibility that the insulating films at the final ends will be damaged.

In view of the above-described circumstances, an object of the present disclosure is to provide a method of manufacturing an armature that can prevent insulating films at the final ends of segment coil leg portions from being damaged at the time when the interlayer intervals are widened.

### Solution to Problem

A method of manufacturing an armature of a first aspect is a method of manufacturing an armature having a core in which a plurality of slots are formed, and a plurality of segment coils having both leg portions inserted in respective slots of the core and that are superposed in a plurality of layers in a radial direction of the core and are arrayed in annular forms, the method comprising: inserting the both leg portions of each of the plurality of segment coils into the respective slots of the core from an axial direction one side of the core; by moving a tool that has at least one tooth by a robot manipulator, inserting the at least one tooth between final ends of the respective layers from an axial direction other side toward the axial direction one side; and at a time of inserting the at least one tooth between the final ends, by tilting the tool around an axis that is orthogonal to a direction of insertion of the at least one tooth and to the radial direction, making a distal end of the at least one tooth not contact insulating films that are at the final ends.

In the method of manufacturing an armature of the first aspect, the armature is manufactured that has the core in which plural slots are formed, and the plural segment coils whose both leg portions are inserted in the respective slots of the core and that are superposed in plural layers in a radial direction of the core and are arrayed in annular forms. In this manufacturing method, both leg portions of each of the plural segment coils are inserted into the respective slots of the core from an axial direction one side of the core. Then, due to a tool that has at least one tooth being moved by a robot manipulator, the at least one tooth is inserted between the final ends of the segment coil leg portions of the respective layers from the axial direction another side toward the axial direction one side. Due thereto, the intervals between the final ends of the segment coil leg portions of the respective layers are widened. At the above-described time of inserting the at least one tooth, due to the tool being tilted around an axis that is orthogonal to the direction of insertion of the at least one tooth and to the radial direction, the distal end of the at least one tooth is made to not contact the insulating films that are at the final ends of the segment coil leg portions. Due thereto, the insulating films at the final ends of the segment coil leg portions can be prevented from being damaged.

In a method of manufacturing an armature of a second aspect, in the first aspect, at the time of inserting the at least one tooth, the tool is rotated around the axis while being moved toward the axial direction one side.

In the method of manufacturing an armature of the second aspect, at the time of inserting the at least one tooth of the tool between the final ends of the segment coil leg portions of the respective layers, the tool is rotated around an axis, which is orthogonal to the direction of insertion of the at least one tooth and to the radial direction of the core, in a state in which the tool has been moved toward the axial direction one side of the core. Due thereto, the tilting of the at least one tooth can be adjusted in accordance with the positions of the segment coil leg portions that are displaced in the radial direction of the core due to the insertion of the at least one tooth.

### Advantageous Effects of Invention

As described above, in the method of manufacturing an armature relating to the present disclosure, the insulating films at the final ends of the segment coil leg portions can be prevented from being damaged at the time when the interlayer intervals are widened.

### BRIEF DESCRIPTION OF DRAWINGS

Fig. 1 is a perspective view illustrating a state in the midst of manufacturing a stator by a method of manufacturing an armature relating to an embodiment.
Fig. 2A is a front view illustrating a segment coil.
Fig. 2B is a side view illustrating the segment coil.
Fig. 2C is a top view illustrating the segment coil.
Fig. 3 is a plan view for explaining a method of inserting segment coil leg portions into respective slots of a stator core.
Fig. 4 is a cross-sectional view for explaining a push-in step of segment coils.
Fig. 5 is a side view illustrating peripheral structures, including main portions of an interlayer interval widening device.
Fig. 6 is a side view illustrating a state in which the segment coil leg portions that are superposed in plural layers are nipped by a clamp.
Fig. 7 is a side view illustrating a state in which distal ends of comb teeth of a tool are inserted between final ends of the segment coil leg portions of the respective layers.
Fig. 8 is an enlarged side view in which a portion of Fig. 7 is enlarged.
Fig. 9 is a side view illustrating a state in which the tool is tilted at the time when the comb teeth of the tool are inserted between the final ends of the segment coil leg portions of the respective layers.
Fig. 10 is an enlarged side view in which a portion of Fig. 9 is enlarged.
Fig. 11 is a side view illustrating a state in which the comb teeth of the tool are set vertically, in the midst of the comb teeth being inserted between the final ends of the segment coil leg portions of the respective layers.
Fig. 12 is a side view illustrating a state in which, in a first comparative example, the comb teeth are being inserted between the final ends of the segment coil leg portions of the respective layers in a state in which the tool is not tilted.
Fig. 13 is an enlarged side view in which a portion of Fig. 12 is enlarged.
Fig. 14 is a side view illustrating a state in which, in a second comparative example, at the time when the comb teeth of the tool are inserted between the final ends of the segment coil leg portions of the respective layers, the tool is moved toward the radial direction outer side of the stator core and the interlayer intervals are enlarged.
Fig. 15 is an enlarged side view in which a portion of Fig. 14 is enlarged.
Fig. 16 is a side view illustrating a state in which, in the second comparative example, in a state in which the intervals between the final ends of the segment coil leg portions of the respective layers have been enlarged, the comb teeth of the tool are being moved toward an axial direction one side of the stator core.
Fig. 17 is an enlarged side view in which a portion of Fig. 16 is enlarged.

### DESCRIPTION OF EMBODIMENTS

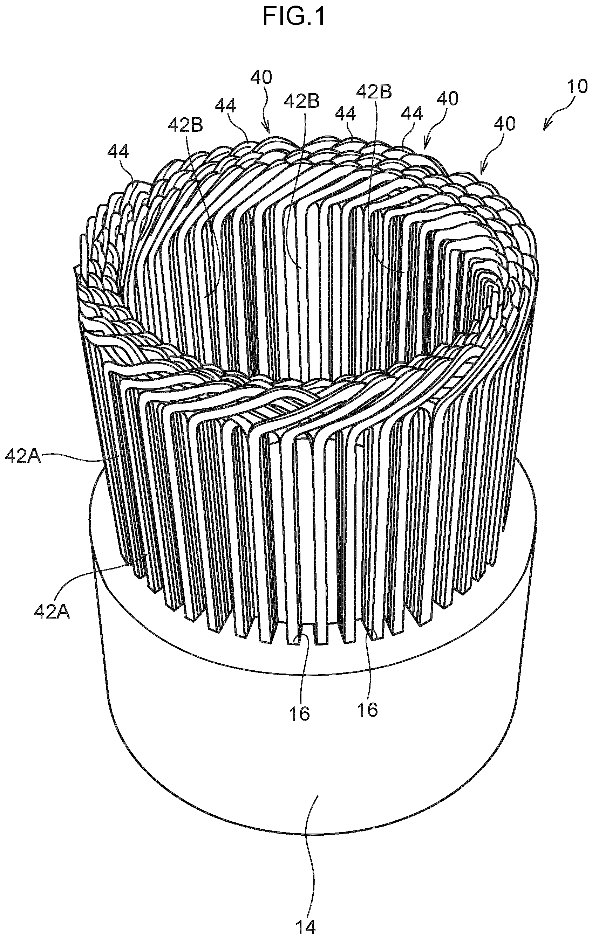

A method of manufacturing an armature relating to an embodiment of the present disclosure is described hereinafter with reference to Fig. 1 through Fig. 11. Note that, in the respective drawings, there are cases in which some of the reference numerals are omitted in order to make the drawings easier to understand. A state in the midst of manufacturing a stator 10, which is manufactured by the method of manufacturing an armature relating to the present embodiment, is illustrated in a perspective view in Fig. 1. This stator 10 (stator; armature) has a stator core 14 in which numerous slots 16 are formed, and numerous segment coils (rectangular wire coils) 40 whose both leg portions 42A, 42B are inserted in the respective slots 16 of the stator core 14 and that are superposed in plural layers in the radial direction of the stator core 14 and are arrayed in annular forms.

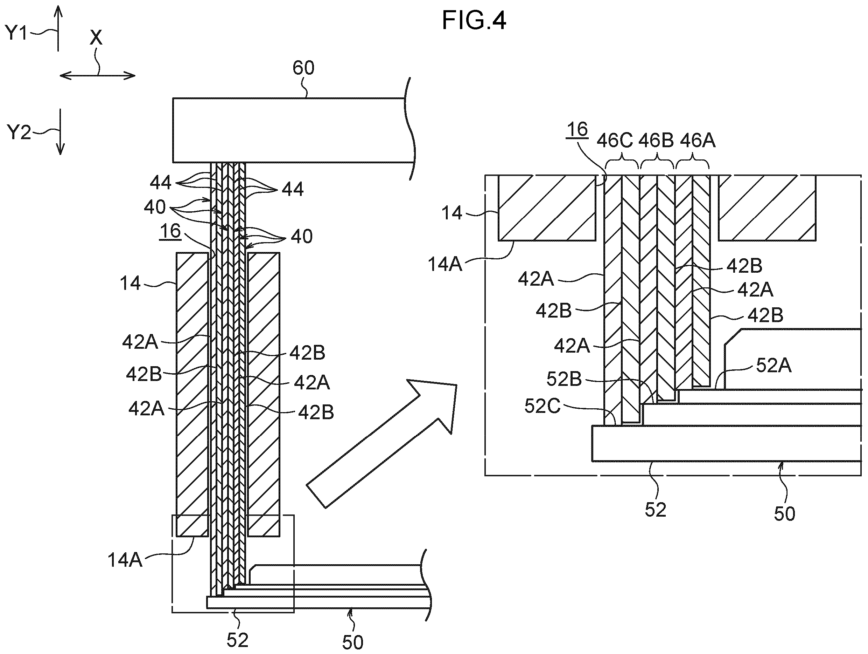

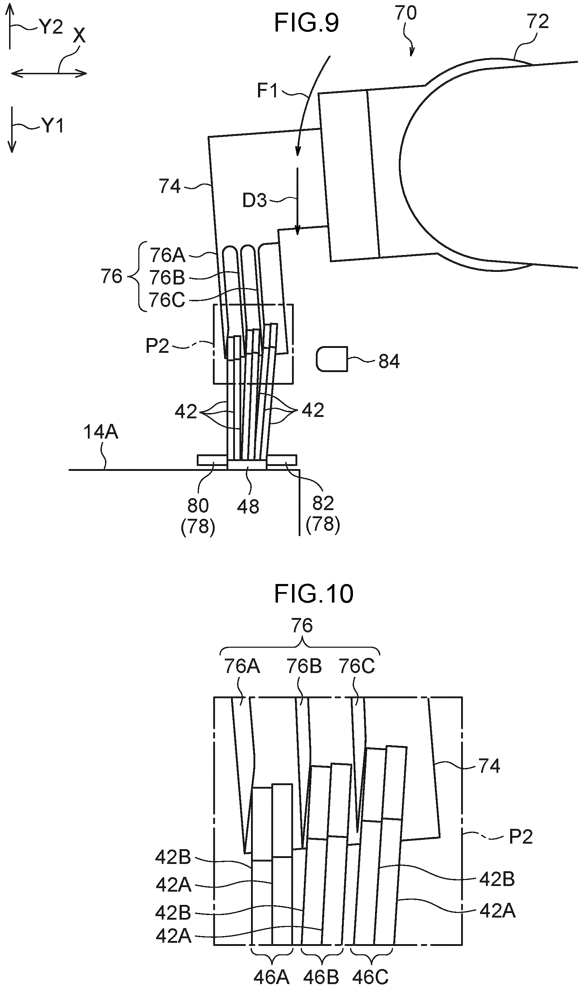

The stator core 14 corresponds to the "core" in the present disclosure. This stator core 14 is formed in the shape of a cylindrical tube by numerous electromagnetic steel plates being layered. The numerous slots 16 are formed in the inner peripheral portion of the stator core 14. At the numerous slots 16, the both sides in the axial direction of the stator core 14 and the inner sides in the radial direction are open. Note that, in Fig. 4 through Fig. 7 and in Fig. 9, arrow Yl, arrow Y2 and arrow X indicate an axial direction one side, an axial direction another side, and the radial direction of the stator core 14, respectively. Hereinafter, there are cases in which the axial direction of the stator core 14 is simply called the "axial direction", the radial direction of the stator core 14 is simply called the "radial direction", and the peripheral direction of the stator core 14 is simply called the "peripheral direction".

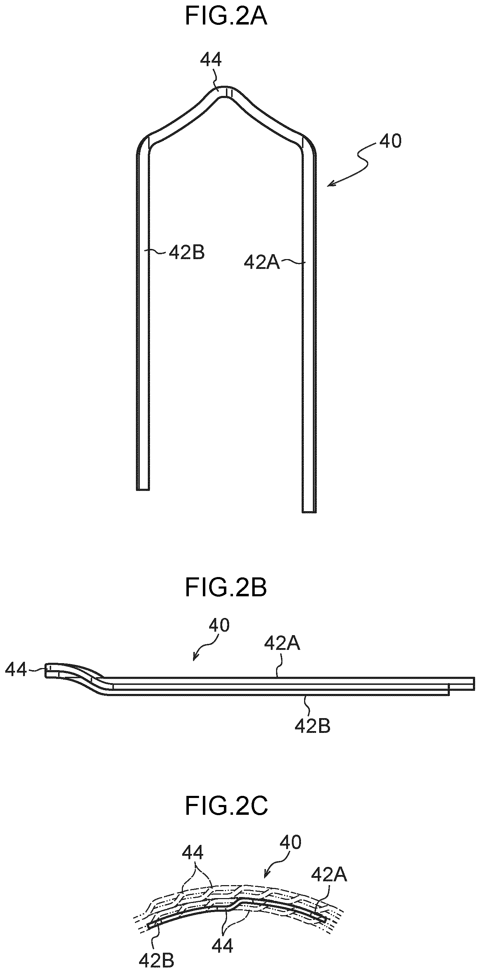

As illustrated in Fig. 2A through Fig. 2C, the segment coil 40 is a structure produced by a rectangular wire, which is formed of copper or the like and covered by an insulating film, being shaped into a U-shape, and is structured by the pair of leg portions 42A, 42B that extend parallel to one another, and a bent portion (turn portion) 44 that connects one end portions of the pair of leg portions 42A, 42B together. The leg portion 42A at one side in the peripheral direction is formed to be slightly longer in the axial direction than the leg portion 42B at the another side in the peripheral direction. Further, the insulating film is removed at the distal end portions of the respective leg portions 42A, 42B.

As illustrated in Fig. 2C, the central portion of the bent portion 44 is bent in the shape of a crank such that one end side of the bent portion 44 is disposed so as to be offset in the radial direction with respect to the another end side of the bent portion 44. The segment coil 40 is structured such that the positional relationship in the radial direction between the leg portion 42A and the leg portion 42B is changed due to this bent portion 44 being formed. Due thereto, the plural segment coils 40 are layered in the radial direction as illustrated by the two-dot chain lines in Fig. 2C.

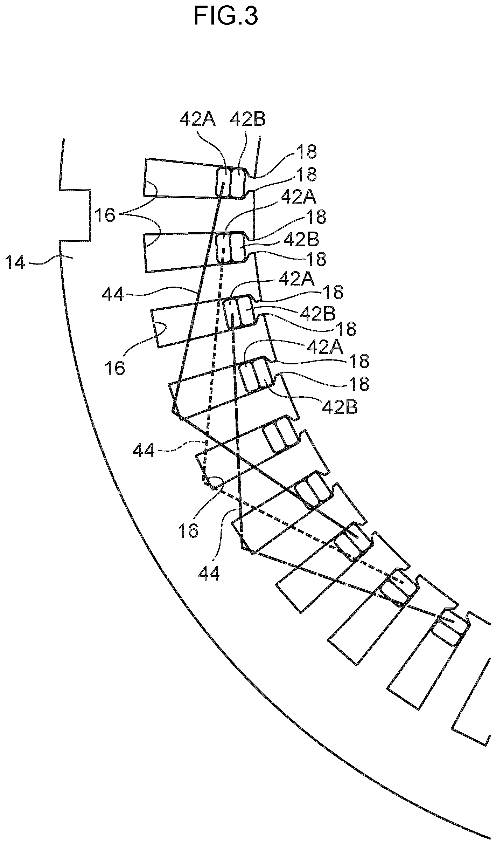

As illustrated in Fig. 1, at the numerous segment coils 40, the both leg portions 42A, 42B are respectively inserted into the respective slots 16 of the stator core 14 from an axial direction one side, and the segment coils 40 are superposed in plural layers in the radial direction of the stator coil 14 and are arrayed in annular forms. As illustrated in Fig. 3, one layer is formed by the segment coils 40 being successively inserted into the slots 16 one-by-one along the peripheral direction, once around the periphery. In the present embodiment, as illustrated in Fig. 4, three layers 46A, 46B, 46C of the segment coils 40 are formed. Note that, in the present embodiment, as an example, a stopper portion 18 (see Fig. 3), which prevents the segment coil 40 from falling out of the slot 16, is formed at the radial direction inner side end portion of each slot 16.

As illustrated in Fig. 4, in the present embodiment, the axial direction lengths of the both leg portions 42A, 42B of the segment coils 40 are set so as to become longer in a stepwise manner from the layer 46A at the inner side toward the layer 46C at the outer side of the three layers 46A, 46B, 46C. Further, as illustrated in Fig. 3 and Fig. 4, within each of the slots 16, at each of the respective layers 46A, 46B, 46C, the leg portion 42A at one side of one of the segment coils 40 is superposed on the radial direction outer side of the leg portion 42B at the another side of another one of the segment coils 40.

Note that, in the inserting of the numerous segment coils 40 into the stator core 14, for example, a method can be employed in which, by setting the numerous segment coils 40 in an annular arraying jig, an assembly of the segment coils 40 that are arrayed in an annular form is formed, and each assembly is inserted one-by-one into the respective slots 16 of the stator core 14. Or, for example, a method may be employed in which the segment coils 40 are inserted one-by-one into the respective slots 16 of the stator core 14. When either of these methods is employed, the numerous segment coils 40 are only inserted midway into the respective slots 16 of the stator core 14. Therefore, after the numerous segment coils 40 are inserted into the respective slots 16 of the stator core 14, a push-in step of pushing the numerous segment coils 40 further into the stator core 14 is carried out.

In the present embodiment, the push-in step of the numerous segment coils 40 is carried out by using a first jig 50 and a second jig 60 illustrated in Fig. 4. Due to this push-in step, the numerous segment coils 40 are pushed into the stator core 14 up to set positions. When this push-in step is carried out, the amounts of projection of the final ends of the leg portions 42A, 42B from an end surface 14A at the axial direction another side of the stator core 14 become longer in a stepwise manner from the layer 46A at the inner side toward the layer 46C at the outer side of the plural layers 46A, 46B, 46C. Note that, in the following explanation, there are cases in which the leg portions 42A, 42B of the segment coils 40 are simply called the "leg portions 42".

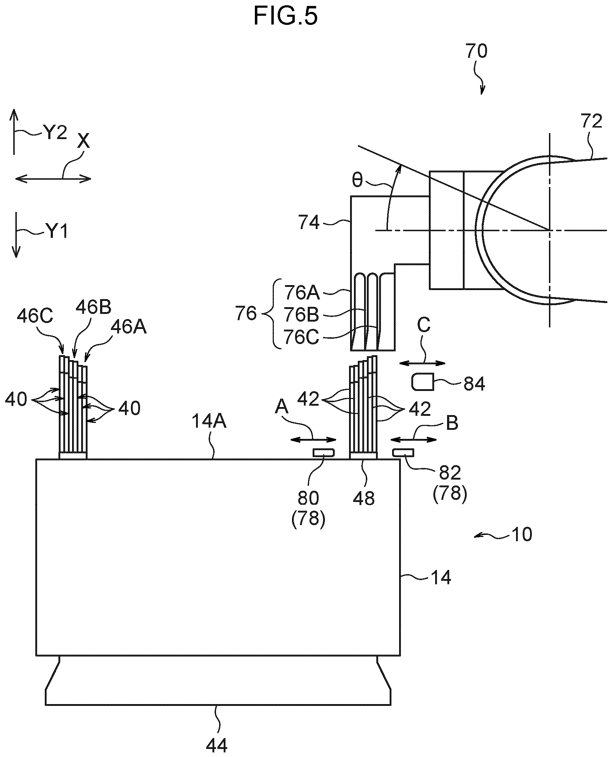

When the above-described push-in step is completed, the method moves onto an interlayer interval widening step that is the next step. In the interlayer interval widening step, as illustrated in Fig. 5, the stator 10 after the push-in step is placed on an unillustrated turntable in a posture in which the final ends of the leg portions 42 of the plural segment coils 40 are facing upward. Note that the bent portions 44 of the plural segment coils 40 are illustrated schematically in Fig. 5. The aforementioned turntable structures a portion of an interlayer interval widening device 70 illustrated in Fig. 5.

In the interlayer interval widening step, the intervals in the radial direction between the final ends of the leg portions 42 of the respective layers 46A, 46B, 46C (hereinafter simply called the "intervals between the final ends") are widened by using the above-described interlayer interval widening device 70. This widening of the intervals is, as an example, carried out successively per one slot 16. Due to this widening of the intervals, the plural (here, six) leg portions 42 that are inserted in the same slot 16 are moved apart from one another per pair 42A, 42B of each of the layers 46A, 46B, 46C. Due thereto, in a twisting step that is executed after the interlayer interval widening step, alignment of the final ends of the leg portions 42 with respect to the twisting tool is easy, and the work efficiency in the twisting step improves. Note that, in Fig. 5, 48 is an insulating paper (not illustrated in Fig. 1, Fig. 3 and Fig. 4) for insulating the leg portions 42 of the segment coils 40 from the stator core 14.

The above-described interlayer interval widening device 70 is structured to include a robot manipulator 72, a tool 74, a clamp 78 and a pusher 84. The robot manipulator 72 structures, for example, the main body portion of a vertical articulated robot of six axes, and the operations thereof are controlled by an unillustrated controller. Note that, in Fig. 5, theta indicates the angle of rotation around the fifth axis of the robot manipulator 72.

The tool 74 is an end effector that is mounted to the distal end of the robot manipulator 72, and is formed of metal for example. This tool 74 has comb teeth 76 that are formed in the shapes of teeth of a comb. The comb teeth 76 have plural (here, three) teeth 76A, 76B, 76C that are lined-up at an interval in the axial direction of the sixth axis of the robot manipulator 72. The three teeth 76A, 76B, 76C are formed in the shapes of plates whose plate thickness directions are the axial direction of the aforementioned sixth axis and whose length directions are the radial direction of the aforementioned sixth axis, and the distal ends thereof are pointed in the forms of single-edge blades. The tool 74 is disposed above the stator 10 in a posture in which the three teeth 76A, 76B, 76C extend downward and the direction in which the three teeth 76A, 76B, 76C are lined-up is the same direction as the radial direction. In this state, the three teeth 76A, 76B, 76C are in postures in which the surfaces thereof that are inclined in the forms of single-edge blades face the radial direction outer side. Note that it suffices for the tool 74 to have at least one tooth.

The clamp 78 has an inner radial side coil presser 80 and an outer radial side coil presser 82. The inner radial side coil presser 80 and the outer radial side coil presser 82 are, for example, formed in the shapes of plates and of metal. The inner radial side coil presser 80 is disposed at the inner side, in the radial direction of the stator core 14, of the roots of the portions, which project-out from the end surface 14A of the stator core 14, of the final ends of the leg portions 42A of the layer 46A at the inner side. The outer radial side coil presser 82 is disposed at the outer side, in the radial direction of the stator core 14, of the roots of the portions, which project-out from the end surface 14A of the stator core 14, of the final ends of the leg portions 42B of the layer 46C at the outer side. The inner radial side coil presser 80 and the outer radial side coil presser 82 are moved in the radial direction of the stator core 14 by an unillustrated actuator (refer to arrow A and arrow B in Fig. 5). The roots of the portions, which project-out from the end surface 14A, of the final ends of the leg portions 42 of the respective layers 46A, 46B, 46C can be nipped in the radial direction by the inner radial side coil presser 80 and the outer radial side coil presser 82.

The pusher 84 is, for example, formed in the shape of a block and of resin, and is disposed at the outer side, in the radial direction of the stator core 14, of the distal end portions of the portions, which project-out from the end surface 14A of the stator core 14, of the final ends of the leg portions 42B of the layer 46C at the outer side. The pusher 84 is moved in the radial direction by an unillustrated actuator (refer to arrow C in Fig. 5). The final ends of the leg portions 42 of the layer 46C at the outer side can be pushed toward the radial direction inner side by this pusher 84.

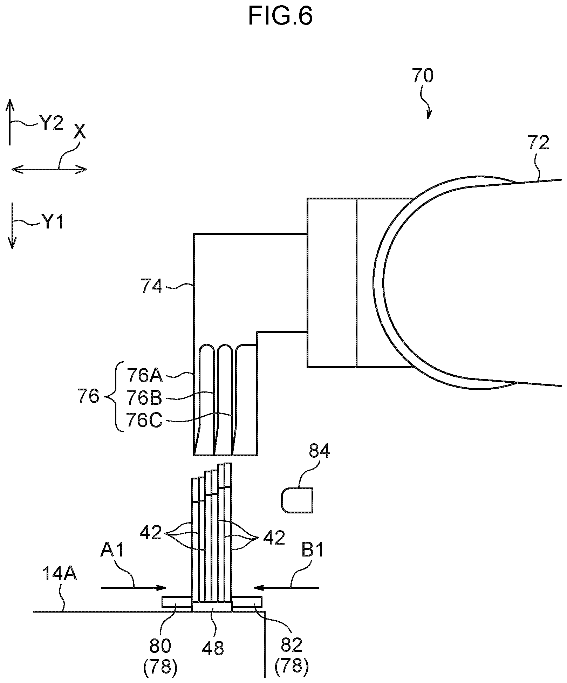

The interlayer interval widening device 70 of the above-described structure carries out an interlayer interval widening step due to operations of the above-described robot manipulator 72, turntable, and respective actuators being controlled by an unillustrated controller. In this interlayer interval widening step, first, as illustrated in Fig. 6, the roots of the portions, which project-out from the end surface 14A of the stator core 14, of the final ends of the leg portions 42 of the respective layers 46A, 46B, 46C are nipped in the radial direction by the clamp 78 (refer to arrow A1 and arrow B 1 in Fig. 6). The final ends of the leg portions 42 of the respective layers 46A, 46B, 46C are thereby positioned in the radial direction, the insulating paper 48 is protected, the point of origin of the bending of the leg portions 42 of the respective layers 46A, 46B, 46C is generated, and axial direction movement of the leg portions 42 of the respective layers 46A, 46B, 46C is restricted.

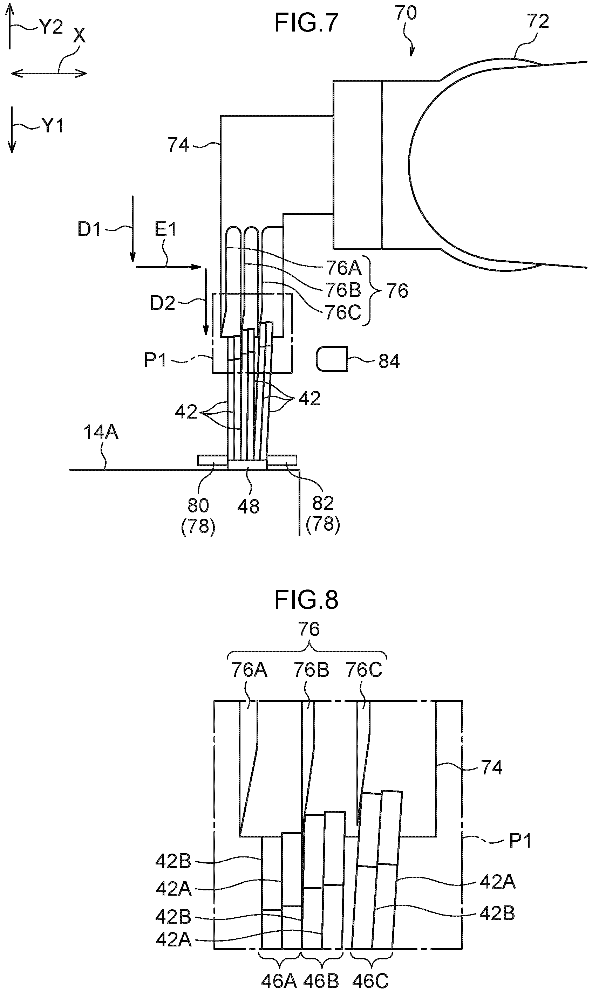

Next, as illustrated in Fig. 7, the tool 74 is moved in the axial direction and the radial direction by the robot manipulator 72 (refer to arrow D1, arrow E1 and arrow D2 in Fig. 7). Due thereto, as illustrated in Fig. 7 and Fig. 8, the distal ends of the comb teeth 76 of the tool 74 are inserted between the final ends of the leg portions 42 of respective layers 46A, 46B, 46C. Specifically, the distal end of the tooth 76B of the comb teeth 76 is inserted between the layer 46A and the layer 46B, and the distal end of the tooth 76C of the comb teeth 76 is inserted between the layer 46B and the layer 46C.

Next, due to the tool 74 being moved toward the axial direction one side (the lower side) by the robot manipulator 72, the teeth 76B, 76C of the comb teeth 76 are inserted between the final ends of the leg portions 42 of respective layers 46A, 46B, 46C, from the axial direction another side (the upper side) toward the axial direction one side (the lower side). At the time of this inserting, the tool 74 is tilted around an axis (here, the fifth axis of the robot manipulator 72) that is orthogonal to the direction in which the comb teeth 76 are lined-up (the radial direction) and the direction of insertion of the comb teeth 76. At this time, the tool 74 is tilted such that the respective distal ends of the teeth 76A, 76B, 76C of the comb teeth 76 are displaced toward the axial direction one side and the radial direction outer side. Due thereto, as illustrated in Fig. 9 and Fig. 10, the respective distal ends of the teeth 76A, 76B, 76C of the comb teeth 76 are made to not contact the insulating films of the final ends of the leg portions 42.

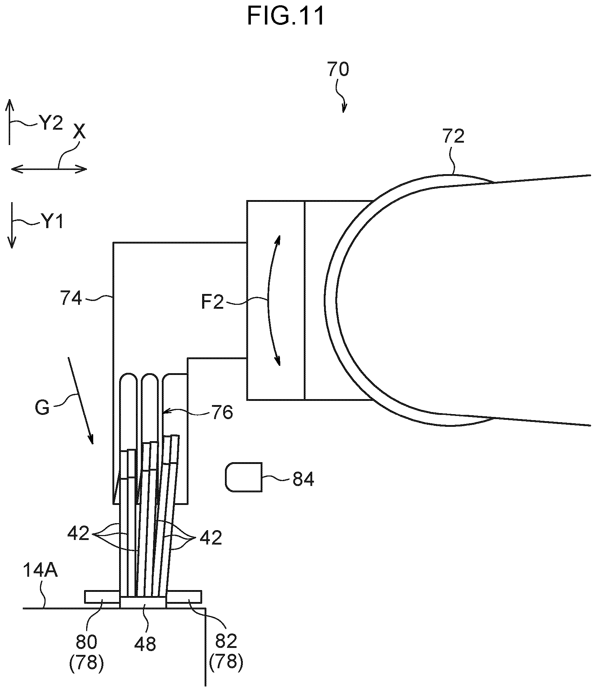

In the present embodiment, as an example, after the tool 74 is tilted around the fifth axis of the robot manipulator 72 as shown by arrow F1 in Fig. 9, the tool 74 is moved toward the axial direction one side as shown by arrow D3 in Fig. 9. Further, in the present embodiment, at the time when the comb teeth 76 are inserted between the final ends of the leg portions 42 of respective layers 46A, 46B, 46C, the tool 74 is rotated around the fifth axis of the robot manipulator 72 in a state in which the tool 74 has been moved toward the axial direction one side. Due thereto, for example, in the midst of the tool 74 being moved toward the axial direction one side as illustrated by arrow G in Fig. 11, the tool 74 is rotated around the fifth axis of the robot manipulator 72 as illustrated by arrow F2, and the comb teeth 76 of the tool 74 are set vertical.

Note that the comb teeth 76 may be inserted between the final ends of the leg portions 42 of the respective layers 46A, 46B, 46C while the tool 74 is being tilted around the fifth axis of the robot manipulator 72. Further, in the state in which the comb teeth 76 have been completely inserted between the final ends of the leg portions 42 of the respective layers 46A, 46B, 46C, the tool 74 may be in a tilted state or may not be in a tilted state.

When the comb teeth 76 have been completely inserted between the final ends of the leg portions 42 of the respective layers 46A, 46B, 46C, due to the tool 74 being moved by the robot manipulator 72, the final ends of the leg portions 42 of the respective layers 46A, 46B, 46C are bent in predetermined shapes (substantial crank shapes). Thereafter, the tool 74 is raised by the robot manipulator 72, and the comb teeth 76 are pulled-out from between the final ends of the leg portions 42 of the respective layers 46A, 46B, 46C. The interlayer interval widening step is thereby completed. Note that, as an example, the present embodiment is structured such that the process of widening the intervals between the layers is carried out per one slot 16, but the present disclosure is not limited to this. The process of widening the intervals between the layers may be carried out per plural slots 16 by providing a plurality of the structural members of the interlayer interval widening device 70 such as the robot manipulator 72 and the like.

### (Summary of Embodiment)

In the method of manufacturing a stator relating to the present embodiment, there is manufactured the stator 10 that has the stator core 14 in which the plural slots 16 are formed, and the plural segment coils 40 whose both leg portions 42A, 42B are inserted in the respective slots 16 of the stator core 14, and that are superposed in the plural layers 46A, 46B, 46C in the radial direction of the stator core 14, and that are arrayed in annular forms. In this manufacturing method, the both leg portions 42A, 42B of the plural segment coils 40 are respectively inserted into the respective slots 16 of the stator core 14 from the axial direction one side of the stator core 14.

Then, due to the tool 74 that has the comb teeth 76 being moved by the robot manipulator 72, the comb teeth 76 are inserted in, from the axial direction another side toward the axial direction one side, between the final ends of the leg portions 42 of the respective layers 46A, 46B, 46C. Due thereto, the intervals between the final ends of the leg portions 42 of the respective layers 46A, 46B, 46C are widened. At the above-described time of inserting the comb teeth 76, due to the tool 74 being tilted around an axis that is orthogonal to the direction in which the comb teeth 76 are lined-up and the direction of insertion of the comb teeth 76, the distal ends of the comb teeth 76 are made to not contact the insulating films of the final ends of the leg portions 42. Due thereto, the insulating films at the final ends of the leg portions 42 can be prevented from being damaged.

Further, in the present embodiment, the amounts of projection of the final ends of the leg portions 42 from the end surface 14A at the axial direction another side of the stator core 14 are set so as to become longer in a stepwise manner from the layer 46A at the inner side toward the layer 46C at the outer side of the above-described plural layers 46A, 46B, 46C. Due thereto, it is easy to widen the intervals between the final ends of the leg portions 42 of the respective layers 46A, 46B, 46C. Further, the twisting processing in a twisting step thereafter is easy.

Further, in the present embodiment, at the time when the comb teeth 76 of the tool 74 are inserted between the final ends of the leg portions 42 of the respective layers 46A, 46B, 46C, the tool 74 is rotated around an axis that is orthogonal to the direction in which the comb teeth 76 are lined-up and the direction of insertion of the comb teeth 76, in a state in which the tool 74 has been moved toward the axial direction one side of the stator core 14. Due thereto, the tilting of the comb teeth 76 can be adjusted in accordance with the positions of the leg portions 42 that are displaced in the radial direction of the stator core 14 due to the insertion of the comb teeth 76.

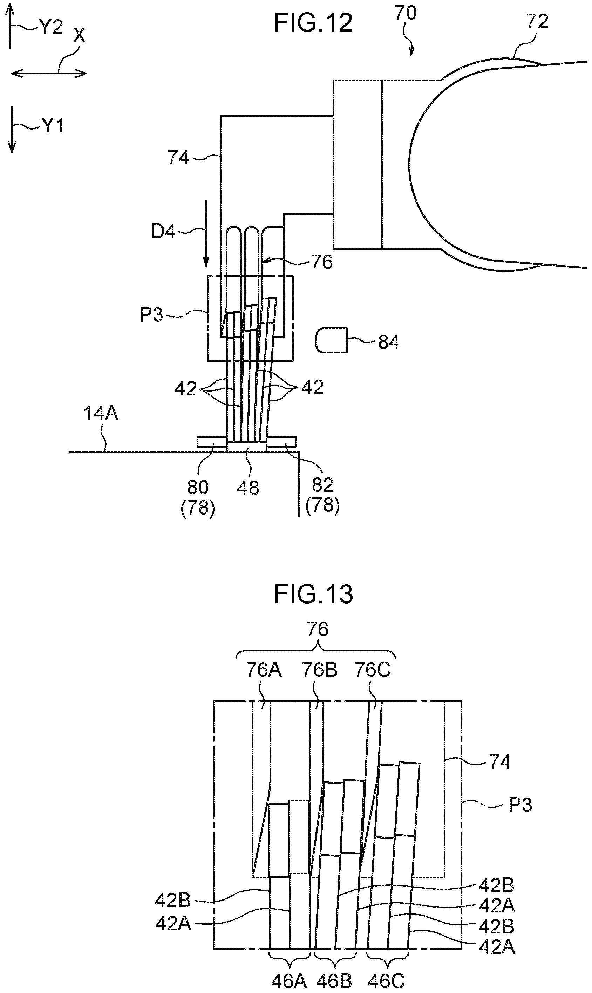

Effects of the present embodiment are additionally described hereinafter with reference to the comparative examples illustrated in Fig. 12 through Fig. 17. In a first comparative example illustrated in Fig. 12 and Fig. 13, the comb teeth 76 are inserted between the final ends of the leg portions 42 of the respective layers 46A, 46B, 46C (refer to arrow D4 in Fig. 12) in a state in which the tool 74 is not tilted. In this first comparative example, as illustrated in Fig. 13, the insulating films at the final ends of the leg portions 42 are damaged due to the distal ends of the comb teeth 76 slidingly contacting the side surfaces of the final ends of the leg portions 42.

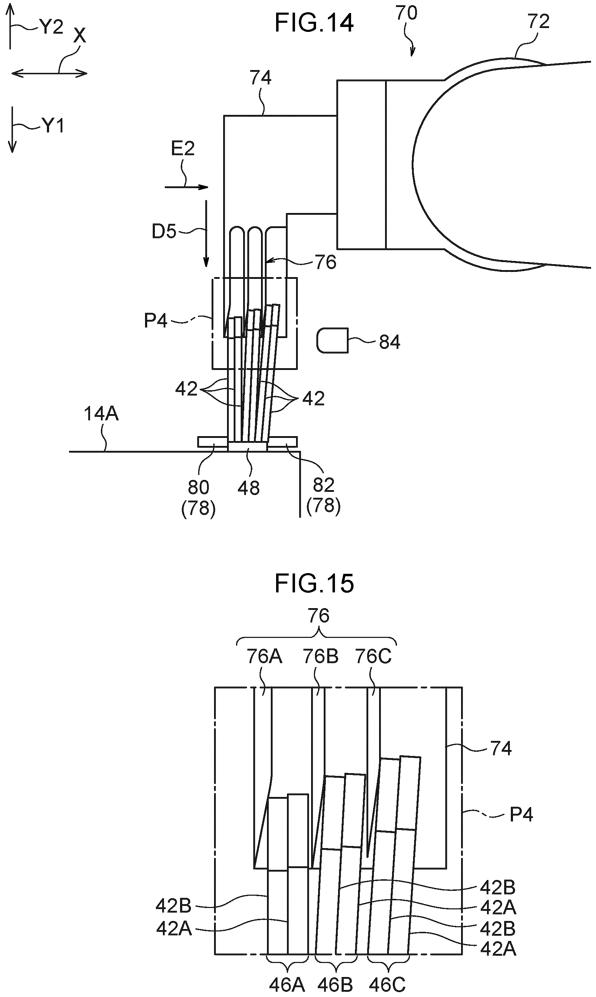

On the other hand, in a second comparative example illustrated in Fig. 14, at the time when the comb teeth 76 of the tool 74 are inserted between the final ends of the leg portions 42 of the respective layers 46A, 46B, 46C, the tool 74 is moved toward the radial direction outer side of the stator core 14 (refer to arrow E2 and arrow D5 in Fig. 14) in the state in which the respective distal end sides of the teeth 76A, 76B, 76C of the comb teeth 76 contact the final ends of the leg portions 42 of the respective layers 46A, 46B, 46C. The intervals between the final ends of the leg portions 42 of the respective layers 46A, 46B, 46C are thereby widened toward the outer side in the radial direction. Due thereto, as illustrated in Fig. 15, in the initial stage of the inserting of the comb teeth 76, it can be made such that the distal ends of the comb teeth 76 do not contact the final ends of the leg portions 42.

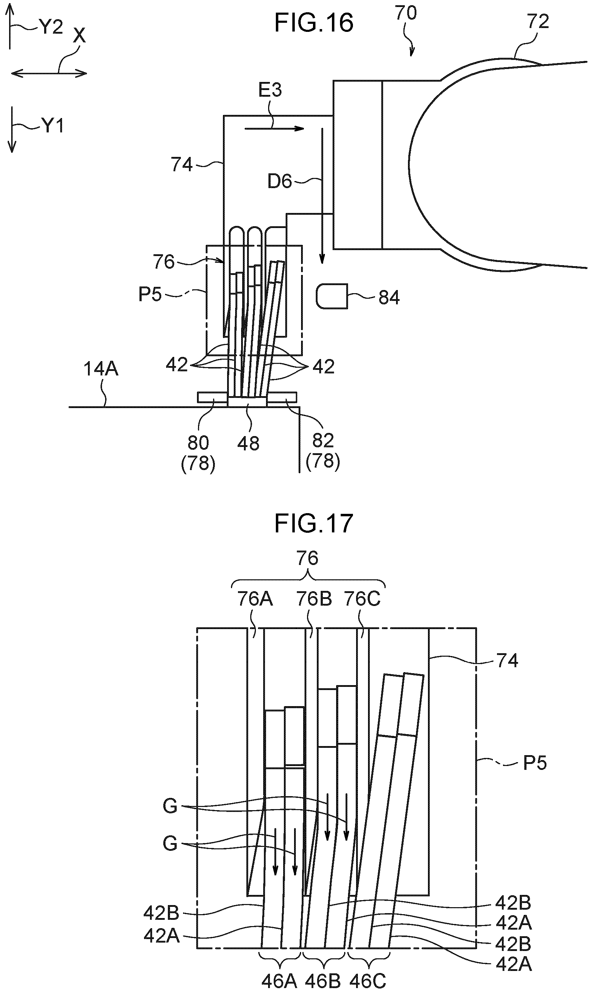

However, in this second comparative example, the comb teeth 76 of the tool 74 are moved toward the axial direction one side of the stator core 14 (refer to arrow E3 and arrow D6 in Fig. 16) in the state in which the intervals between the final ends of the leg portions 42 of the respective layers 46A, 46B, 46C have been widened toward the outer side in the radial direction. Therefore, the sliding resistance between the leg portions 42 and the comb teeth 76 becomes large. As a result, the load on the robot manipulator 72 increases, and the positions of the segment coils 40 are inadvertently offset toward the axial direction one side (refer to arrows G in Fig. 17).

In contrast, in the present embodiment, as described above, due to the tilting of the tool 74, the distal ends of the comb teeth 76 are made to not contact the final ends of the leg portions 42. Therefore, not only can damage to the insulating films of the final ends of the leg portions 42 be prevented, but also, an increase in the load of the robot manipulator 72 and inadvertent positional offset of the segment coils 40 can be avoided. Moreover, because it is possible to use the tool 74 at which the distal ends of the comb teeth 76 are pointed, the insertion of the comb teeth 76 into between the final ends of the leg portions 42 of the respective layers 46A, 46B, 46C is easy.

Note that the above embodiment describes a case in which a stator is manufactured, but the present disclosure can be applied also to manufacture of a rotor.

In addition, the present disclosure can be implemented by being modified in various ways within a scope that does not depart from the gist thereof. Further, the scope of the right of the present disclosure is, of course, not limited by the above-described embodiment.

The disclosure of Japanese Patent Application No. 2022-009724 filed on January 25, 2022 is, in its entirety, incorporated by reference into the present specification. All publications, patent applications, and technical standards mentioned in the present specification are incorporated by reference into the present specification to the same extent as if such individual publication, patent application, or technical standard was specifically and individually indicated to be incorporated by reference.

## Claims

1. A method of manufacturing an armature having a core in which a plurality of slots are formed, and a plurality of segment coils having both leg portions inserted in respective slots of the core and that are superposed in a plurality of layers in a radial direction of the core and are arrayed in annular forms, the method comprising:
inserting the both leg portions of each of the plurality of segment coils into the respective slots of the core from an axial direction one side of the core;
by moving a tool that has at least one tooth by a robot manipulator, inserting the at least one tooth between final ends of the leg portions of the respective layers from an axial direction other side toward the axial direction one side; and
at a time of inserting the at least one tooth between the final ends, by tilting the tool around an axis that is orthogonal to a direction of insertion of the at least one tooth and to the radial direction, making a distal end of the at least one tooth not contact insulating films that are at the final ends.

2. The method of manufacturing an armature of Claim 1, wherein, at the time of inserting the at least one tooth, the tool is rotated around the axis while being moved toward the axial direction one side.
